(19) **Europäisches Patentamt**
**European Patent Office**
**Office européen des brevets**

(11) **EP 3 992 809 A1**

(12) **EUROPÄISCHE PATENTANMELDUNG**

(43) Veröffentlichungstag:
04.05.2022   Patentblatt 2022/18

(21) Anmeldenummer: 20204902.9

(22) Anmeldetag: **30.10.2020**

(51) Internationale Patentklassifikation (IPC):
**G06F 16/2455** (2019.01)   **G06F 16/25** (2019.01)

(52) Gemeinsame Patentklassifikation (CPC):
**G06F 16/254; G06F 16/24568; G06N 5/00**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Mobility GmbH**
**81739 München (DE)**

(72) Erfinder: **Braband, Jens**
**38106 Braunschweig (DE)**

(54) **VERFAHREN UND COMPUTER ZUM AUFBEREITEN VON DATEN DURCH EINEN TRANSFORMATIONSSCHRITT**

(57)   Gegenstand der Erfindung ist ein Verfahren zum Aufbereiten von Daten, bei dem aus Rohdaten (D, D1 ... D5) rechnergestützt in einem Transformationsschritt (TRS) transformierte Daten (d, d1 ... d5) generiert werden. Die transformierten Daten (d, d1 ... d5) weisen ein Datenformat auf, welches dahingehend vereinheitlicht ist, dass mindestens zwei durch die Daten repräsentierte Größen in einem durch einen einheitlichen Maßstab (t) definieren Verlauf durch die Größen beschreibende Werte v(t) definiert werden. Vorzugsweise können die durch einen Anwender transformierten Daten einem Provider, der beispielsweise ein maschinelles Lernen durch Anwendung von künstlicher Intelligenz anbietet, zur Verfügung gestellt werden. Ferner umfasst die Erfindung ein Verfahren zum rechnergestützten Verarbeiten von Daten, einen Computer, ein Computerprogrammprodukt sowie eine Bereitstellungsvorrichtung.

FIG 1

Processed by Luminess, 75001 PARIS (FR)

EP 3 992 809 A1

**Beschreibung**

Die Erfindung betrifft ein Verfahren zum Aufbereiten von Daten, bei dem aus Rohdaten rechnergestützt in einem Transformationsschritt transformierte Daten generiert werden. Außerdem betrifft die Erfindung ein Verfahren zum rechnergestützten Verarbeiten von Daten. Weiterhin betrifft die Erfindung einen Computer mit einer ersten Schnittstelle zur Ausgabe von Daten. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Anwendungen von Künstlicher Intelligenz leiden häufig unter der Diversität und Inhomogenität der auszuwertenden Daten. Dadurch sind viel mehr Daten notwendig, als wenn es homogene, strukturierte Daten wären. Außerdem braucht man zur Interpretation sehr viel sogenanntes Domänen-Know-How (beschreibt die Zusammenhänge und Abhängigkeiten der Daten und der durch die Daten beschriebenen Prozesse), dass entweder die AI-Spezialisten lernen und/oder die Domänen-Spezialisten bereitstellen müssen. Dies führt zu Know-How-Abfluss und/oder zu starker Ressourcen-Belastung.

Die Aufgabe der Erfindung besteht darin, ein Verfahren und einen Computer zum Aufbereiten von Daten in einem Transformationsschritt anzugeben, das/der die Möglichkeit der Anwendung eines Maschinellen Lernens (ML) insbesondere durch einen Provider für auf ML gerichtete Dienstleistungen vereinfacht. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Verfahren zur Datentransformation) erfindungsgemäß dadurch gelöst, dass die transformierten Daten ein Datenformat aufweisen, welches dahingehend vereinheitlicht ist, dass mindestens zwei durch die Daten repräsentierte Größen in einem durch einen einheitlichen Maßstab definieren Verlauf durch die Größen beschreibende Werte definiert werden.

Die grundsätzliche Idee besteht darin, ein einheitliches Daten-Austauschformat (kurz als Datenformat bezeichnet) zwischen einem Anwender (Domänen-Experten, der bedingt durch den Betrieb seiner Anwendung Daten erzeugt) und einem Provider (beispielsweise einem AI-Experten, der sein Know-How und/oder die erforderliche Rechenleistung mit künstlicher Intelligenz, kurz AI, für ein maschinelles Lernen, kurz ML, zur Verfügung stellt) zu definieren, insbesondere für sensordatengetriebene Anwendungen. Mit anderen Worten wird mit der Erfindung das Ziel erreicht, dass der Anwender Daten (in Form von transformierten Daten) generieren kann, die er einem Provider zur Verfügung stellen kann, ohne dass für diesen ein erhöhter Aufwand bei der Weiterverarbeitung aufgrund der Heterogenität von Rohdaten (also der nicht transformierten Daten) auftritt. Auch ist es beispielsweise möglich, dass der Anwender die transformierten Daten in einem einheitlichen Format in Speichereinrichtungen wie Datenbanken abspeichert, wobei diese untereinander vergleichbar bleiben, solange auch andere Daten in dem Datenformat der transformierten Daten abgespeichert werden.

Der Anwender stellt erfindungsgemäß eine Transformation (beispielsweise mittels einer Transformationsfunktion Φ) der Rohdaten (beispielsweise von Sensordaten) bereit, mit deren Hilfe die unstrukturierten Rohdaten D in das Standard-Format $d = \Phi(D)$ transformiert werden. In Φ steckt das Domänen-Know-How des Domänen-Experten, welches dieser vorteilhaft mit dem Provider nicht teilen muss. Der AI-Experte arbeitet nur auf mit den transformierten Daten d, einem Format mit abstrakter Semantik, das aber für KI-Algorithmen besser geeignet ist. Der AI-Experte kann sich somit auf die Anwendung der KI zum Beispiel zur Anwendung eines ML konzentrieren.

Wie bereits erwähnt ermöglicht der einheitliche Maßstab erfindungsgemäß, dass die transformierten Daten unabhängig von den die Daten repräsentierenden Größen in einem von diesem einheitlichen Maßstab abhängigen Datenformat darstellbar sind. Die Gesamtheit der transformierten Daten können daher durch einen Provider beispielsweise durch Anwendung eines AI unterstützenden Algorithmus bearbeitet werden. Hierfür ist die einzige Voraussetzung, dass der Provider mit dem Maßstab vertraut ist, ohne dass er das bereits erwähnte Domänen-Know-How kennt.

Als Maßstab im Sinne der Erfindung ist eine quantifizierbare Abhängigkeit der Daten zu verstehen. Diese Abhängigkeit soll erfindungsgemäß durch die Transformation der Rohdaten für jede der betrachteten Größen ermittelt werden. Durch vereinheitlichte Darstellung der Abhängigkeit für jede der betrachteten Größen wird daher eine Auswertung durch einen Provider erleichtert, da dieser alle Größen in das durch den Maßstab vorgegebene Bezugssystem einordnen kann.

Beispielsweise für analoge, kontinuierliche Messdaten besteht die Transformation in einer Abtastung zu bestimmten Zeitpunkten oder Orten. Auch Binäre Zustände (beispielsweise Signalbegriffen: ein/aus) lassen sich transformieren. Für Telegramme ist eine Extraktion von Daten notwendig. Die Transformationsfunktion muss mit anderen Worten die Datenstruktur der Rohdaten berücksichtigen, um ein einheitliches Datenformat mit Abhängigkeit vom besagten Maßstab zu ermöglichen. Prinzipiell könnten auch Daten aus Bilddaten extrahiert werden, allerdings ist die Einschränkung, dass die Ergebnisse als Zeitreihenkomponente dargestellt werden müssen.

Insbesondere im Zugverkehr bietet es sich beispielsweise auch an, dass Daten nicht zu bestimmten Zeitpunkten, sondern an bestimmten auf einer Strecke aufeinanderfolgenden Orten zugeordnet werden. Somit lassen sich die transformierten Daten alternativ zu einer Zeitabhängigkeit auch in einer Ortsabhängigkeit darstellen und einem Provider zur Verfügung stellen.

Unter "rechnergestützt" oder "computerimplementiert" kann im Zusammenhang mit der Erfindung eine Implementierung des Verfahrens verstanden werden, bei dem mindestens ein Computer oder Prozessor mindestens einen Verfahrensschritt des Verfahrens ausführt.

Der Ausdruck "Rechner" oder "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Als "Programmmodule" sollen einzelne Funktionseinheiten verstanden werden, die einen erfindungsgemäßen Programmablauf von Verfahrensschritten ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Sofern es in der nachfolgenden Beschreibung nicht anders angegeben ist, beziehen sich die Begriffe "erstellen", "feststellen", "berechnen", "generieren", "konfigurieren", "modifizieren" und dergleichen vorzugsweise auf Prozesse, die Daten erzeugen und/oder verändern und/oder die Daten in andere Daten überführen. Dabei liegen die Daten insbesondere als physikalische Größen vor, beispielsweise als elektrische Impulse oder auch als Messwerte. Die erforderlichen Anweisungen Programmbefehle sind in einem Computerprogramm als Software zusammengefasst. Weiterhin beziehen sich die Begriffe "senden", "empfangen", "einlesen", "auslesen", "übertragen" und dergleichen auf das Zusammenspiel einzelner Hardwarekomponenten und/oder Softwarekomponenten über Schnittstellen.

Gemäß einer Ausgestaltung der Erfindung ist vorgesehen, dass die transformierten Daten die Größen jeweils als diskrete Wertereihen, mit Werten zu diskreten Stützstellen definieren.

Als diskrete Wertereihe oder auch Zeitreihe im Sinne der Erfindung ist einer Reihe von Werten für die dargestellte Größe zu verstehen, wobei diese Werte diskreten Stützstellen, beispielsweise diskreten Zeitpunkten oder Orten, zugeordnet werden. Die diskreten Stützstellen liegen vorzugsweise in gleichmäßigen Abständen, wodurch eine Auflösung $\Delta t$ für die entsprechenden Stützpunkte vorliegt. Als konkretes Format wird mit anderen Worten eine mehrdimensionale diskrete Wertereihe (Zeitreihe) vorgeschlagen, mit kontinuierlichem oder diskretem Wertebereich für die Größe.

Der Begriff "Zeitreihe" soll im Sinne der Erfindung als Fachbegriff verstanden werden, der eine Reihe von Werten betrifft (Daher auch Wertereihe genannt). Diese Werte können vorzugsweise Messwerte oder auch andere Werte sein, die beispielsweise durch Auswertung eines Telegramms gewonnen werden. Auch müssen die Werte (trotz des in der Statistik üblichen Begriffes "Zeitreihe" nicht notwendig zu bestimmten Zeitpunkten als Stützstellen ermittelt werden, sondern es können auch andere Maßstäbe verwendet werden. Der Begriff Zeitreihe ist jedoch auch bei Verwendung anderer Stützstellen zutreffend. Daher sollen andere Maßstäbe, insbesondere ortsabhängige Maßstäbe in dem Begriff Zeitreihe enthalten sein. Stützstellen können also vorzugsweise Zeitpunkte oder Punkte auf einem Weg, insbesondere auf einer schienengebundenen Strecke sein.

Die Auswertung der Zeitreihe erfolgt in einem stochastischen Prozess, wobei es dann vom Index abhängt, ob die Stützstellen Zeiten z. B. t=1,2,3... s. oder Orte, d. h. t=1,2,3.. m, oder ein anderer Maßstab ist. Die Regeln für die statistische Auswertung werden dadurch nicht berührt.

Gemäß einer Ausgestaltung der Erfindung ist vorgesehen, dass die diskreten Stützstellen der jeweiligen Größen jeweils einen konstanten Abstand haben, der durch eine Auflösung ($\Delta t$) definiert ist.

Das Vorhandensein von Stützstellen jeweils in einem konstanten Abstand erleichtert die Interpretation der generierten transformierten Daten. Insbesondere lässt sich hierdurch die Änderung der transformierten Daten in Bezug auf den Maßstab (vorzugsweise Zeit oder Ort) einfacher quantitativ beurteilen. Dies betrifft auch die Algorithmen, die bei einem maschinellen Lernen angewandt werden.

Gemäß einer Ausgestaltung der Erfindung ist vorgesehen, dass die Wertereihe für mindestens zwei Größen individuelle, sich unterscheidende Auflösungen ($\Delta_i t$) aufweist.

Durch Vorsehen individueller Auflösungen kann der Natur der Daten sowie die Anforderungen an ihre Verwertung vorteilhaft bei der Transformation berücksichtigt werden. Vorteilhaft ist es, wenn die verschiedenen Auflösungen in einem ganzzahligen Verhältnis zueinander stehen. Dies vereinfacht vorteilhaft deren Verarbeitung durch den Provider, der die Anzahl der auszuwertenden Stützstellen dann der Anzahl von Stützstellen mit der größten Auflösung entsprechen.

Gemäß einer Ausgestaltung der Erfindung ist vorgesehen, dass die Wertereihe für mindestens zwei Größen die gleiche Auflösung ($\Delta t$) aufweist.

Im einfachsten synchronen Fall besteht die Wertereihe (Zeitreihe) aus Werten $v(t)$ für einen mehrdimensionalen Parametervektor V mit zu äquidistanten Stützstellen, die jeweils $\Delta t$ auseinanderliegen. Alternativ kann man die Zeitreihe asynchron aufbauen, entweder erhält dann jede Komponente $v_i(t)$ eine eigene Auflösung $\Delta_i t$, oder es kann ein individueller Vektor mit (festen) Stützstellen vorgegeben werden. Insgesamt wird die Anwendung eines ML hierdurch wesentlich vereinfacht.

Gemäß einer Ausgestaltung der Erfindung ist vorgesehen, dass eine der Größen sich kontinuierlich ändert, wobei die Transformationsfunktion diskrete Stützstellen definiert, denen der zugehörige Wert der Größe zugeordnet wird.

Als zugehöriger Wert im Sinne der Erfindung ist derjenige Wert zu verstehen, der an der definierten diskreten Stützstelle Gültigkeit hat. Handelt es sich beispielsweise um Messdaten, so ist der Messwert an der diskreten Stützstelle zuzuordnen, der zu dem zugehörigen Zeitpunkt oder an dem zugehörigen Ort gemessen wird oder als letztes davor gemessen wurde (Ortsauflösung oder Zeitauflösung, andere Auflösungen sind denkbar). Hierdurch lässt sich vorteilhaft eine optimale Annäherung bei einer vorgegebenen Auflösung $\Delta t$ erreichen.

Gemäß einer Ausgestaltung der Erfindung ist vorgesehen, dass eine der Größen einen diskret sich ändernder Wert hat, wobei die Transformationsfunktion diskrete Stützstellen definiert, denen der an der betreffenden Stützstelle gerade geltende oder davor ermittelte Wert zugeordnet wird.

Hierdurch wird es vorteilhaft möglich, diskrete Werte derart den Stützstellen zuzuordnen, dass jede Stützstelle durch einen der diskreten Werte repräsentiert wird. Wenn sich die diskreten Werte in einem anderen Muster ändern, als dies von den Stützstellen (in Abhängigkeit der Auflösung) vorgegeben wird, so beinhaltet die Transformation die Zuordnung des jeweiligen am besten geeigneten diskreten Werts zu der betreffenden Stützstelle.

Gemäß einer Ausgestaltung der Erfindung ist vorgesehen, dass eine der Größen ein binärer Wert ist, wobei die Transformationsfunktion diskrete Stützstellen definiert, denen der an der betreffenden Stützstelle gerade geltende Wert zugeordnet wird, oder ermittelt wird, ob an der betreffenden Stützstelle ein Wert vorliegt oder nicht.

Bei der Transformation kann damit vorteilhaft berücksichtigt werden, dass ein binärer Wert auch dann vorliegen kann, wenn es einen Zustand gibt, in der ein Wert vorliegt und einen Zustand gibt, in der kein Wert vorliegt. Der Zustand, in dem kein Wert vorliegt, wird dann als binärer Zustand null interpretiert, das Vorlieben eines Wertes als eins. Selbstverständlich ist es auch möglich einen originär binären Wert, beispielsweise Schaltzustände ein/aus, durch die besagte Transformation abzubilden.

Gemäß einer Ausgestaltung der Erfindung ist vorgesehen, dass die Werte der Größe aus einem Datentelegramm extrahiert werden und unter Anwendung der Transformationsfunktion diskreten Zeitpunkten zugeordnet werden.

> Hierbei könnte es sich zum Beispiel um eine Bremskurve handeln, die im Betrieb des Zuges einzuhalten ist (also ein Soll-Verlauf, abgelegt in einem Datentelegramm). Wird dieser derart extrahiert, so dass die Sollwerte in Abhängigkeit von der Zeit darstellbar sind, so lassen sich die Sollwerte beispielsweise mit gemessenen Ist-Werten der gemessenen Verzögerung vergleichen. Die Daten werden dabei vorteilhaft dem Provider in einem Format zur Verfügung gestellt, das einen direkten Vergleich erlaubt.

Gemäß einer Ausgestaltung der Erfindung ist vorgesehen, dass als Rohdaten einen schienengebundenen Verkehrsbetrieb beschreibende Daten generiert werden.

Der schienengebundene Verkehrsbetrieb kann vorteilhaft in besonderer Weise von der Anwendung einer KI (für ein ML) profitieren. Der Verkehrsbetrieb ist stark reglementiert und lässt sich daher gut in transformierten Daten darstellen. Gleichzeitig schaffen die Regeln ein hohes Potenzial für Optimierungen, die durch ein ML unterstützt werden können.

Anwendungsbeispiel wäre ein Zug, bei dem viele Daten aus unterschiedlichen Quellen stammen, seien es analoge oder diskrete Messdaten, Zustände, Anwendungstelegramme, Logfiles, streckenbezogene Messwerte, Daten des Zugbetriebs einer Zugbeeinflussung etc. Diese würden durch die Transformation in beispielsweise eine gemeinsame Zeitbasis (alternativ Ortsbasis, insbesondere streckengebunden) mit einer für alle Anwendungen ausreichenden Diskretisierung gebracht werden.

Die genannte Aufgabe wird alternativ mit dem eingangs angegebenen Anspruchsgegenstand (Verfahren zum rechnergestützten Verarbeiten) erfindungsgemäß auch dadurch gelöst, dass die Daten transformierte Daten sind, die vor dem Einlesen in einen ersten Computer in einem Transformationsschritt durch einen zweiten Computer nach dem Verfahren gemäß dem vorstehend beschriebenen Verfahren aus Rohdaten berechnet werden.

Damit steht dem zweiten für Computer zum Beispiel zur Durchführung eines ML ein Datensatz zur Verfügung, dessen Daten in der bereits beschriebenen Weise vorher transformiert wurden. Hiermit werden für die weitere Datenverarbeitung durch den zweiten Computer die Vorteile erreicht, die vorstehend bereits beschrieben wurden.

Gemäß einer Ausgestaltung der Erfindung ist vorgesehen, dass der erste Computer von einem Provider, der das maschinelle Lernen durchführt, betrieben wird und der zweite Computer von einem Anwender, der die Rohdaten erzeugt, betrieben wird.

Der Provider ist mit anderen Worten dadurch definiert, dass er das maschinelle Lernen durchführt, d. h., eine Dienstleistung anbietet, die auf ein maschinelles Lernen gerichtet ist. Damit ist der Provider der bereits erwähnte KI-Experte, der das Know-how hat, seine durch den zweiten Computer erzeugte künstliche Intelligenz zum Zwecke eines maschinellen Lernens anzuwenden.

Hierzu benötigt der Provider die Daten, welche die Grundlage für die Optimierung eines Prozesses unter Anwendung des maschinellen Lernens bilden. Diese werden ihm als transformierte Daten vom Anwender zur Verfügung gestellt. Der Anwender ist in diesem Zusammenhang derjenige, der die Rohdaten erzeugt. Allerdings überträgt der Anwender, wie bereits erläutert, nicht die Rohdaten, sondern die transformierten Daten über die erste Schnittstelle.

Die genannte Aufgabe wird alternativ mit dem eingangs angegebenen Anspruchsgegenstand (Computer) erfindungsgemäß auch dadurch gelöst, dass der Computer eingerichtet ist, als zweiter Computer über die erste Schnittstelle Daten mit einem ersten Computer nach dem vorstehend beschriebenen Verfahren auszutauschen.

Mit anderen Worten ist der Computer dazu eingerichtet (beispielsweise durch geeignete Software), um das vorstehend Verfahren durchzuführen. Hierdurch werden die im Zusammenhang mit dem vorstehenden Verfahren bereits erläuterten Vorteile erreicht.

Mit dem Computer lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für die erfindungsgemäße Computer.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch durch mit den vorstehend beschriebenen Merkmalen der Erfindung kombinierbar.

Es zeigen:

Figur 1 ein Ausführungsbeispiel der erfindungsbemäßen Datenumgebung im Bahnbetrieb mit ihren Wirkzusammenhängen schematisch,

Figur 2 ein Ausführungsbeispiel einer Computer-Infrastruktur der Vorrichtung gemäß Figur 1 als Blockschaltbild, wobei die einzelnen Funktionseinheiten Programmmodule enthalten, die jeweils in einem oder mehreren Prozessoren ablaufen können und die Schnittstellen demgemäß softwaretechnisch oder hardwaretechnisch ausgeführt sein können,

Figur 3 ein Ausführungsbeispiel des erfindungsgemäßen Verfahrens als Flussdiagramm, wobei die einzelnen Verfahrensschritte einzeln oder in Gruppen durch Programmmodule verwirklicht sein können und wobei die Funktionseinheiten und Schnittstellen gemäß Figur 2 beispielhaft angedeutet sind.

In Figur eins ist eine Datenumgebung dargestellt, die beispielsweise bei einem Zug Betrieb genutzt werden kann. Hierbei werden unterschiedliche da Rohdaten die erzeugt, im einzelnen Rohdaten D1 ... D5, die unterschiedliche Datenformate aufweisen.

Die Rohdaten werden daher während eines Transformationsschritts TRS in transformierte Daten d transformiert. Hierbei kommt eine Transformationsfunktion zum Einsatz, die definiert ist mit

$$d = \Phi(D)$$

Die Transformationsfunktion Φ beinhaltet mehrere Teiltransformationsfunktionen Φ1, ... Φ5, die jeweils den Rohdaten D1 ... D5 zugeordnet sind.

Mittels der Teiltransformationsfunktionen Φ1, ... Φ5 können jeweils transformierte Daten d1 ... d5 erzeugt werden, die durch die Transformation gemeinsam von der Laufvariable abhängig sind (in diesem Ausführungsbeispiel stellt die Laufvariable ohne Beschränkung der Allgemeinheit die Zeit t dar).

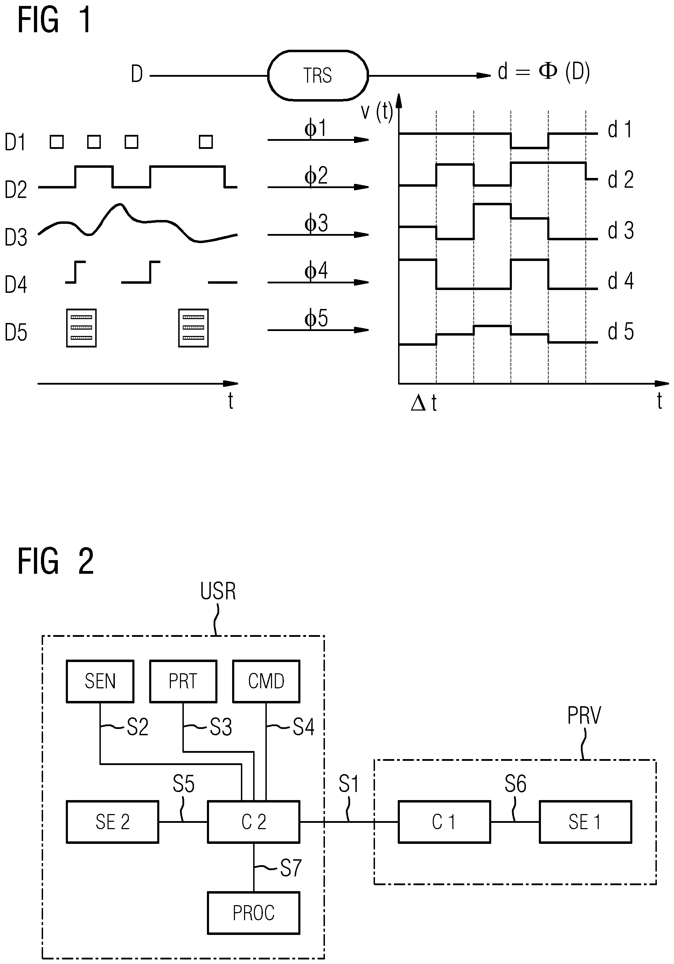

Wie bereits erwähnt, handelt es sich in dem Beispiel gemäß Figur 1 bei der Laufvariablen um die Zeit t. Die transformierten Daten d1 ... d5 sind nach der Transformation TRS daher in Abhängigkeit von der Zeit darstellbar, wobei in den transformierten Daten enthaltene Werte v(t) einer Wertereihe (auch Zeitreihe genannt) in äquidestanten Zeitschritten definiert sind. Diese Zeitschritte geben eine Auflösung Δt vor, die gemäß Figur 1 für alle transformierten Daten d1 ... d5 gleich groß ist. Nicht dargestellt, aber genauso möglich, ist es, dass für die transformierten Daten d1 ... d5 unterschiedliche Auflösungen Δt gewählt werden. Die sich ergebenden Funktionen v(t) für die transformierten Daten d1 ... d5 sind nach Durchführung des Transformationsschrittes TRS als Sprungfunktionen definiert, die ihre Werte jeweils nur an den durch die Auflösung Δt vorgegebenen Stützstellen (die jeweils durch die gestrichelten Linien angedeutet sind) ändern können.

Der Vorteil des erfindungsgemäßen Verfahrens liegt, wie bereits erläutert, darin, dass Rohdaten D mit unterschiedlichen Eigenschaften mittels der Transformation TRS in transformierte Daten d mit einem einheitlichen Datenformat gebracht werden können. Das Datenformat ist dahingehend einheitlich definiert, dass die Daten (die in ihrer Charakteristik unterschiedlich bleiben können) die Gemeinsamkeit aufweisen, dass diese an den Stützstellen definierte Werte aufweisen, wobei die Stützstellen nach einem einheitlichen Maßstab definiert sind, so dass die transformierten Daten untereinander mithilfe des Maßstabes in eine eindeutige Beziehung gesetzt werden können. Wie bereits erwähnt, besteht der Maßstab gemäß Figur 1 aus einer definierten zeitlichen Abfolge, weswegen die Laufvariable zur Definition der Stützstellen t ist. Dies ist in Figur 1 schematisch angedeutet. Beispiele für unterschiedliche Charakteristiken der Rohdaten D werden nachfolgend nicht abschließend aufgezählt.

Bei D1 und D2 handelt es sich um binäre Rohdaten. D1 betrifft das Auftreten eines Ereignisses oder das Nicht-Auftreten eines Ereignisses, wobei die transformierten Daten d1 durch die Transformationsfunktion Φ1 für den Fall, dass das Ereignis auftritt, mit v(t) = 1 und, wenn das Ereignis nicht auftritt, mit v(t) = 0 angesetzt wird. Die Ereignisse sind in Figur 1 als kleine Quadrate angedeutet.

Die binäre Funktion D2 ist ein binärer Verlauf eines Wertes für die Rohdaten D2. Hier wird deutlich, dass der Transformationsschritt TRS mit der Transformationsfunktion Φ2 an den Binärdaten selbst nichts ändert, sondern lediglich eine Abtastung mit der Auflösung Δt erfolgt, um den Verlauf des Wertes mit den transformierten Daten d2 in dieser Auflösung darstellen zu können.

Bei den Rohdaten D3 handelt es sich um einen Verlauf eines Wertes in einem kontinuierlichen Wertespektrum. Der Transformationsschritt TRS mit der Transformationsfunktion Φ3 verwandelt diesen kontinuierlichen Verlauf durch Wertermittlung zumindest an den Stützstellen in eine Sprungfunktion v(t) der transformierten Daten d3, wobei hierbei an sich bekannte Näherungsverfahren angewendet werden können.

Die Rohdaten D4 weisen einen diskontinuierlichen Verlauf auf. Bei dem Transformationsschritt TRS mittels der Transformationsfunktion Φ4 wird unter Berücksichtigung der Auflösung Δt der Wert bei den transformierten Daten d4 auf 0 gesetzt, sofern dieser auch in den Rohdaten D4 gleich 0 ist oder nicht vorliegt. Ansonsten wird der vorliegende Wert der Rohdaten D4 übernommen.

Die Rohdaten D5 bestehen aus einem Protokoll, angedeutet in Figur 1 durch eine Datei. der Transformationsschritt TRS mit der Transformationsfunktion Φ5 erfordert daher eine Interpretation der in dem Protokoll vorliegenden Daten. Diese Interpretation erfordert, wie bereits erläutert, das Domänen-Know-How des Anwenders, wobei die transformierten Daten d5 aufgrund dieses Know-Hows erstellt werden können. Hieraus ergibt sich ein Verlauf, der als Stufenfunktion mit der Auflösung Δt dargestellt werden kann.

In Figur 2 ist eine Hardware-Infrastruktur dargestellt, die die Zusammenarbeit eines Anwenders USR und eines Providers PRV zeigt. Diese kommunizieren über eine erste Schnittstelle S1, die mit einem ersten Computer C1 des Providers PRV und einem zweiten Computer C2 des Anwenders USR verbunden ist.

Zur Aufbereitung von Daten unter Anwendung des Domänen-Know-Hows kann der Anwender USR beispielsweise einen Sensor SEN, ein Protokoll PRT oder Steuerbefehle CMD für den Bahnbetrieb auswerten. Daher ist in Figur 2 exemplarisch der Sensor SEN dargestellt, der über eine zweite Schnittstelle S2 mit dem zweiten Computer C2 verbunden ist, das Protokoll PRT dargestellt, welches über eine dritte Schnittstelle S3 in den zweiten Computer C2 eingelesen werden kann, und ein Steuerbefehl CMD (beispielsweise erzeugt durch ein Steuerelement an der Strecke oder in einem Schienenfahrzeug, welches über eine vierte Schnittstelle S4 in den zweiten Computer C2 eingelesen werden kann. Außerdem verfügt der Anwender USR über eine zweite Speichereinheit SE2, die über eine fünfte Schnittstelle S5 mit dem zweiten Computer C2 verbunden ist, und in der beispielsweise die Transformationsfunktion Φ abgelegt sein kann.

Unter Anwendung der Transformationsfunktion Φ berechnet der Anwender USR die transformierten Daten d und überträgt diese über die erste Schnittstelle S1 an den ersten Computer C1 des Providers PRV. Auch der Provider PRV verfügt über eine erste Speichereinheit SE1, die über eine sechste Schnittstelle S6 mit dem ersten Computer C1 verbunden ist. Diese Hardware-Infrastruktur ist mit einer künstlichen Intelligenz AI ausgestattet und ermöglicht deshalb dem Provider PRV das Durchführen eines maschinellen Lernens ML, um beispielsweise einen von dem Anwender USR verwendeten Prozess PROC zu optimieren. Die Prozessoptimierung wird über die erste Schnittstelle S1 an den Computer C2 des Anwenders USR übertragen, der die Modifikation über eine siebte Schnittstelle S7 in den Prozess PROC einbinden kann.

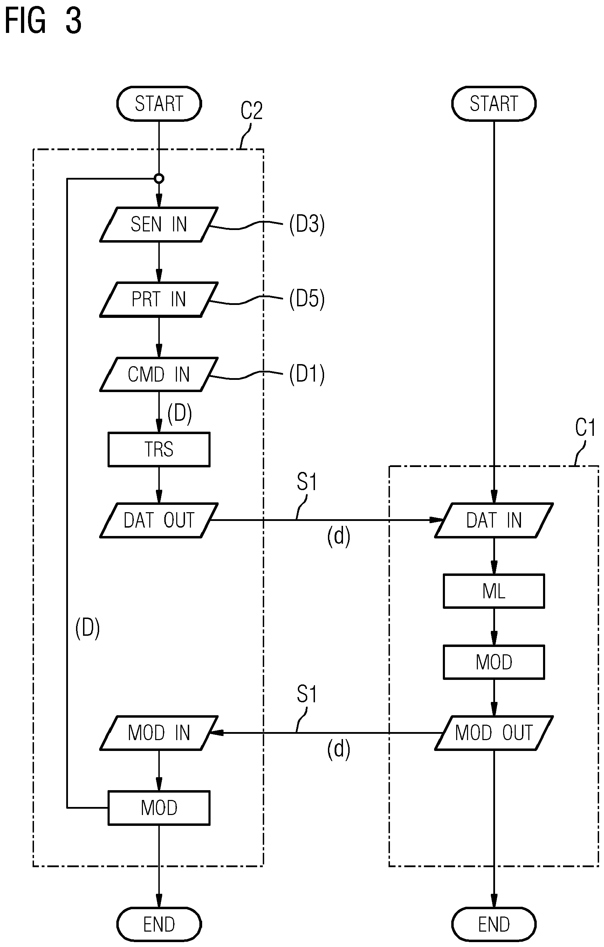

Der Ablauf des Verfahrens ist in Figur 3 schematisch dargestellt. Die jeweils verwendeten Datenformate sind jeweils in Klammern angegeben. Nachdem das Verfahren gestartet wurde, kann der Anwender USR mit dem zweiten Computer C2 exemplarisch dargestellte Einleseschritte für Sensordaten SEN IN, für Protokolle PRT IN und für Steuerbefehle CMD IN durchführen. Mittels seines Domain-Know-Hows und der Transformationsfunktion Φ führt er anschließend den Transformationsschritt TRS durch und erhält die transformierten Daten d (vgl. Figur 1). Anschließend kann ein Ausgabeschritt DAT OUT für die transformierten Daten d über die erste Schnittstelle S1 an den Provider PRV erfolgen, der zu diesem Zweck ein Verfahren für ein maschinelles Lernen ML gestartet hat.

Bei diesem Verfahren des maschinellen Lernens ML erfolgt zunächst ein Eingabeschritt DAT IN für den ersten Computer C1, wobei mit den eingegebenen Daten der Verarbeitungsschritt ML für das maschinelle Lernen durchgeführt werden kann. Das maschinelle Lernen ML führt zu einem Modifikationsschritt MOD, der auf eine Optimierung des Prozesses PROC gerichtet ist. Das Ergebnis des Modifikationsschritts MOD wird in einem Ausgabeschritt für die Modifikation MOD OUT über die erste Schnittstelle S1 an den zweiten Computer C2 des Anwenders USR zurückgespielt und in einem Eingabeschritt MOD IN in den zweiten Computer C2 eingelesen. Der Anwender USR führt den Modifikationsschritt MOD für seine Prozesse aus, wobei auch eine Rücktransformation der Daten erfolgt, und das Verfahren kann durch Eingabeschritte weiterer Sensordaten SEN IN Protokolle PRT IN und Steuerbefehle CMD IN erneut durchgeführt werden, um den Prozess PROC weiter zu optimieren. Das Verfahren endet für den Anwender USR und den Provider PRV, wenn ein Optimierungsprozess beendet wird und den Anwender USR in den Normalbetrieb wechselt (nicht dargestellt).

Bezugszeichenliste

PRV          Provider

| USR | Anwender |
|---|---|
| C1 ... C2 | Computer |
| SE1 ... SE2 | Speichereinheit |
| SEN | Sensor |
| PRT | Protokoll |
| CMD | Steuerbefehl |
| PROC | Prozessor |
| S1 ... S7 | Schnittstelle |
| TRS | Transformationsschritt |
| SEN IN | Einleseschritt (Sensordaten) |
| PRT IN | Einleseschritt (Protokoll) |
| CMD IN | Einleseschritt (Steuerbefehl) |
| DAT OUT | Ausgabeschritt (transformierte Daten) |
| DAT IN | Einleseschritt (transformierte Daten) |
| MOD OUT | Ausgabeschritt (Modifikation) |
| MOD IN | Einleseschritt (Modifikation) |
| ML | Verarbeitungsschritt (Maschinelles Lernen) |
| D, D1 ... D5 | Rohdaten |
| Φ, Φ1, ... Φ5 | Tansformationsfunktion |
| d, d1 ... d5 | transformierte Daten (Austauschformat) |
| t | Zeit |
| Δt | Auflösung |

**Patentansprüche**

1.   Verfahren zum Aufbereiten von Daten, bei dem aus Rohdaten (D, D1 ... D5) rechnergestützt in einem Transformationsschritt (TRS) transformierte Daten (d, d1 ... d5) generiert werden,
**dadurch gekennzeichnet,**
**dass** die transformierten Daten (d, d1 ... d5) ein Datenformat aufweisen, welches dahingehend vereinheitlicht ist, dass mindestens zwei durch die Daten repräsentierte Größen in einem durch einen einheitlichen Maßstab definieren Verlauf durch die Größen beschreibende Werte definiert werden.

2.   Verfahren nach Anspruch 1
**dadurch gekennzeichnet,**
**dass** die transformierten Daten (d, d1 ... d5) die Größen jeweils als diskrete Wertereihen, mit Werten zu diskreten Stützstellen definieren.

3.   Verfahren nach einem der voranstehenden Ansprüche,
**dadurch gekennzeichnet,**
**dass** die diskreten Stützstellen der jeweiligen Größen jeweils einen konstanten Abstand haben, der durch eine Auflösung (Δt) definiert ist.

4.   Verfahren nach Anspruch 3,
**dadurch gekennzeichnet,**
**dass** die Wertereihe für mindestens zwei Größen individuelle, sich unterscheidende Auflösungen ($\Delta_i$t) aufweist.

**5.** Verfahren nach Anspruch 4,
**dadurch gekennzeichnet,**
**dass** die Wertereihe für mindestens zwei Größen die gleiche Auflösung ($\Delta$t) aufweist.

**6.** Verfahren nach einem der voranstehenden Ansprüche,
**dadurch gekennzeichnet,**
**dass** eine der Größen sich kontinuierlich ändert, wobei die Transformationsfunktion ($\Phi$, $\Phi1$, ... $\Phi5$) diskrete Stützstellen definiert, denen der zugehörige Wert der Größe zugeordnet wird.

**7.** Verfahren nach einem der voranstehenden Ansprüche,
**dadurch gekennzeichnet,**
**dass** eine der Größen einen diskret sich ändernden Wert hat, wobei die Transformationsfunktion ($\Phi$, $\Phi1$, ... $\Phi5$) diskrete Stützstellen definiert, denen der an der betreffenden Stützstelle geltende oder zuletzt ermittelte Wert zugeordnet wird.

**8.** Verfahren nach einem der voranstehenden Ansprüche,
**dadurch gekennzeichnet,**
**dass** eine der Größen ein binärer Wert ist, wobei die Transformationsfunktion ($\Phi$, $\Phi1$, ... $\Phi5$) diskrete Stützstellen definiert, denen der an der betreffenden Stützstelle geltende Wert zugeordnet wird, oder ermittelt wird, ob an der betreffenden Stützstelle ein Wert vorliegt oder nicht.

**9.** Verfahren nach einem der voranstehenden Ansprüche,
**dadurch gekennzeichnet,**
**dass** die Werte der Größe aus einem Datentelegramm extrahiert werden und unter Anwendung der Transformationsfunktion ($\Phi$, $\Phi1$, ... $\Phi5$) diskreten Stützstellen zugeordnet werden.

**10.** Verfahren nach Anspruch 9,
**dadurch gekennzeichnet,**
**dass** als Rohdaten (D, D1 ... D5) einen schienengebundenen Verkehrsbetrieb beschreibende Daten generiert werden.

**11.** Verfahren zum rechnergestützten Verarbeiten von Daten,

• für das die Daten über eine erste Schnittstelle (S1) in einem Einleseschritt (DAT IN) in einen ersten Computer (C1) eingelesen werden,
• bei dem anhand der Daten in einem Verarbeitungsschritt ein maschinelles Lernen (ML) durchgeführt wird,

**dadurch gekennzeichnet,**
**dass** die Daten transformierte Daten (d, d1 ... d5) sind, die vor dem Einlesen in einem Transformationsschritt (TRS) durch einen zweiten Computer (C2) nach dem Verfahren gemäß einem der voranstehenden Ansprüche aus Rohdaten (D, D1 ... D5) berechnet werden.

**12.** Verfahren nach Anspruch 11,
**dadurch gekennzeichnet,**
**dass** der erste Computer (C1) von einem Provider (PRV), der das maschinelle Lernen (ML) durchführt, betrieben wird und der zweite Computer (C2) von einem Anwender (USR), der die Rohdaten (D, D1 ... D5) erzeugt, betrieben wird.

**13.** Computer (CI, C2) mit einer ersten Schnittstelle (S1) zur Ausgabe von Daten
**dadurch gekennzeichnet,**
**dass** der Computer (C1, C2) eingerichtet ist, als zweiter Computer über die erste Schnittstelle (S1) Daten mit einem ersten Computer (C1) unter Anwendung des Verfahrens nach Anspruch 11 oder 12 auszutauschen.

**14.** Computerprogrammprodukt mit Programmbefehlen zur Durchführung des Verfahrens nach einem der Ansprüche 1 - 12.

**15.** Bereitstellungsvorrichtung für das Computerprogrammprodukt nach dem letzten voranstehenden Anspruch, wobei die Bereitstellungsvorrichtung das Computerprogrammprodukt speichert und/oder bereitstellt.

## FIG 1

D ——————— ( TRS ) ——————→ d = Φ (D)

D1  □  □  □      □          → φ1

D2  ___⊓_⊓__⊓‾‾⊓___         → φ2

D3  ⌇⌇⌇⌇⌇                    → φ3

D4  _⌐__⌐__ _                → φ4

D5  ▦      ▦                 → φ5

t

v (t)

d 1
d 2
d 3
d 4
d 5

Δ t                          t

## FIG 2

USR

SEN    PRT    CMD

~S2    ~S3    ~S4

SE 2    S5    C 2    S1    PRV    C 1    S6    SE 1

~S7

PROC

# FIG 3

Europäisches
Patentamt

European
Patent Office

Office européen
des brevets

# EUROPÄISCHER RECHERCHENBERICHT

**Nummer der Anmeldung**

EP 20 20 4902

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/071148 A1 (JOSHI NINA S [US] ET AL) 10. März 2016 (2016-03-10) * Absätze [0099], [0110], [0122] * ----- | 1-15 | INV. G06F16/2455 G06F16/25 |

**RECHERCHIERTE SACHGEBIETE (IPC)**

G06F

Der vorliegende Recherchenbericht wurde für alle Patentansprüche erstellt

| Recherchenort | Abschlußdatum der Recherche | Prüfer |
|---|---|---|
| Den Haag | 11. März 2021 | Hackelbusch, Richard |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
....................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 4902

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-03-2021

| Im Recherchenbericht angeführtes Patentdokument | Datum der Veröffentlichung | Mitglied(er) der Patentfamilie | Datum der Veröffentlichung |
|---|---|---|---|
| US 2016071148 A1 | 10-03-2016 | CN 107077776 A | 18-08-2017 |
| | | EP 3192060 A2 | 19-07-2017 |
| | | JP 2017532653 A | 02-11-2017 |
| | | US 2016070276 A1 | 10-03-2016 |
| | | US 2016070614 A1 | 10-03-2016 |
| | | US 2016070920 A1 | 10-03-2016 |
| | | US 2016071148 A1 | 10-03-2016 |
| | | US 2016071183 A1 | 10-03-2016 |
| | | US 2016071184 A1 | 10-03-2016 |
| | | US 2016071196 A1 | 10-03-2016 |
| | | US 2016071219 A1 | 10-03-2016 |
| | | US 2016072891 A1 | 10-03-2016 |
| | | WO 2016040378 A2 | 17-03-2016 |

EPO FORM P0461

Für nähere Einzelheiten zu diesem Anhang : siehe Amtsblatt des Europäischen Patentamts, Nr.12/82